Europäisches Patentamt

**European Patent Office**

**Office européen des brevets**

(19)

(11) Numéro de publication : **0 095 951**
**B1**

(12)

# FASCICULE DE BREVET EUROPÉEN

(45) Date de publication du fascicule du brevet :
**05.03.86**

(21) Numéro de dépôt : **83400896.3**

(22) Date de dépôt : **03.05.83**

(51) Int. Cl.⁴ : **F 02 F   3/22**, F 16 J   1/16,
F 01 P   3/10

(54) Axe de piston et piston, notamment pour moteur à combustion interne, équipé dudit axe.

(30) Priorité : **28.05.82 FR 8209424**

(43) Date de publication de la demande :
**07.12.83 Bulletin 83/49**

(45) Mention de la délivrance du brevet :
**05.03.86 Bulletin 86/10**

(84) Etats contractants désignés :
**BE CH DE GB IT LI NL SE**

(56) Documents cités :
**EP-A- 0 041 416**
**FR-A- 2 125 687**
**FR-A- 2 435 640**

(73) Titulaire : **SOCIETE D'ETUDES DE MACHINES THER-
MIQUES S.E.M.T.**
**2, Quai de Seine**
**F-93202 Saint-Denis (FR)**

(72) Inventeur : **Coulin, Jean-Paul**
**3, Place des Cerisiers**
**F-95160 Montmorency (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention concerne un axe de piston, pour un piston, notamment de moteur à combustion interne, du type articulé par un axe de piston, sensiblement cylindrique, à un pied de bielle, ledit axe de piston étant monté tournant dans un coussinet dudit pied de bielle muni d'une rainure annulaire, notamment située dans le plan médian longitudinal de symétrie dudit axe de piston et dudit pied de bielle, et communiquant avec l'extrémité d'un canal d'alimentation de fluide de refroidissement et/ou de lubrification s'étendant dans le corps de la bielle et débouchant à la surface d'extrémité du pied de bielle, et dans deux paliers espacés solidaires du piston, situés de part et d'autre du pied de bielle et dont les coussinets sont munis de rainures annulaires.

Dans un piston de ce type, l'axe de piston, connu notamment par le document FR-A-2 435 640, est percé d'un certain nombre de canaux, notamment rectilignes, débouchant chacun, à une extrémité, dans la rainure annulaire du coussinet de pied de bielle et, à l'autre extrémité, dans l'une ou l'autre des rainures annulaires des paliers d'axe, ce dit axe étant par ailleurs plein.

L'inconvénient de cet axe de piston connu réside dans le fait que les canaux coupent l'axe géométrique longitudinalement de l'axe de piston, en étant mutuellement sécants sur celui-ci. Or, au voisinage dudit axe s'accumulent généralement des impuretés métalliques fragilisantes risquant d'affaiblir la résistance d'une paroi de cavité située dans cette région, et donc de créer des amorces de fissuration et de rupture dans les canaux en ces emplacements.

La présente invention a donc pour but de pallier cet inconvénient en proposant un axe de piston, pour un piston, notamment pour moteur à combustion interne, du type indiqué ci-dessus et caractérisé en ce que lesdits canaux sont ménagés dans une partie périphérique dudit axe de piston en étant au plus tangents à une partie centrale sensiblement cylindrique dudit axe, coaxiale à celui-ci, dans laquelle la concentration d'impuretés métalliques est maximale.

Selon un mode particulier de réalisation de l'invention, le diamètre de la partie centrale cylindrique précitée est au moins égal à environ le dixième du diamètre de l'axe de piston précité ; les canaux précités étant non-sécants.

Selon un mode particulier de réalisation de l'invention, au moins deux des canaux précités convergent vers leurs extrémités débouchant dans la rainure annulaire précitée du coussinet de pied de bielle.

Selon un mode particulier de réalisation de l'invention, deux canaux convergent vers leurs extrémités précitées débouchant dans la rainure annulaire du coussinet de pied de bielle, leurs autres extrémités débouchant respectivement dans les rainures annulaires des paliers d'axe. On peut notamment prévoir trois paires de canaux précités, les points de convergence des axes longitudinaux desdits canaux pouvant être espacés de 120°, ainsi que les extrémités des axes longitudinaux desdits canaux débouchant dans les rainures annulaires des paliers d'axe.

Selon un mode particulier de réalisation de l'invention, chaque point de convergence des axes longitudinaux des canaux précités et deux extrémités des axes longitudinaux desdits canaux débouchant respectivement dans les rainures annulaires des paliers d'axe peuvent être alignés selon une génératrice de l'axe de piston.

Selon encore un mode particulier de réalisation de l'invention, l'axe de piston précité est percé de trois paires de canaux précités, chaque paire comprenant un canal reliant la rainure annulaire précitée d'un des paliers d'axe à la rainure annulaire du coussinet de pied de bielle, et un canal reliant la rainure annulaire de l'autre palier d'axe, à la rainure annulaire du coussinet de pied de bielle ; les extrémités des axes longitudinaux desdits canaux débouchant dans ladite rainure annulaire du coussinet de pied de bielle étant angulairement espacées de 60°. En outre, les extrémités des axes longitudinaux des canaux précités débouchant dans les rainures des paliers d'axe sont de préférence angulairement espacées de 120°. Enfin, les orifices des canaux précités s'ouvrant sur la rainure annulaire précitée du coussinet de pied de bielle appartiennent aux canaux reliant ladite rainure annulaire du coussinet de pied de bielle à alternativement l'une et l'autre rainures annulaires des paliers d'axe.

L'invention sera mieux comprise, et d'autres buts, caractéristiques, détails et avantages de celle-ci apparaîtront plus clairement au cours de la description explicative qui va suivre faite en se référant aux dessins schématiques annexés donnés uniquement à titre d'exemples non limitatifs de modes de réalisation spécifiques actuellement préférés de l'invention, et dans lesquels :

la figure 1 est une vue en coupe partielle d'un piston muni d'un axe de piston selon l'invention ;

la figure 2 est une vue en coupe selon la ligne II-II de la figure 1 ;

la figure 3 est une vue d'un axe de piston selon un autre mode de réalisation de l'invention ;

la figure 4 est une vue d'un axe de piston selon encore un autre mode de réalisation de l'invention, et

la figure 5 est une vue de droite de l'axe de piston de la figure 4.

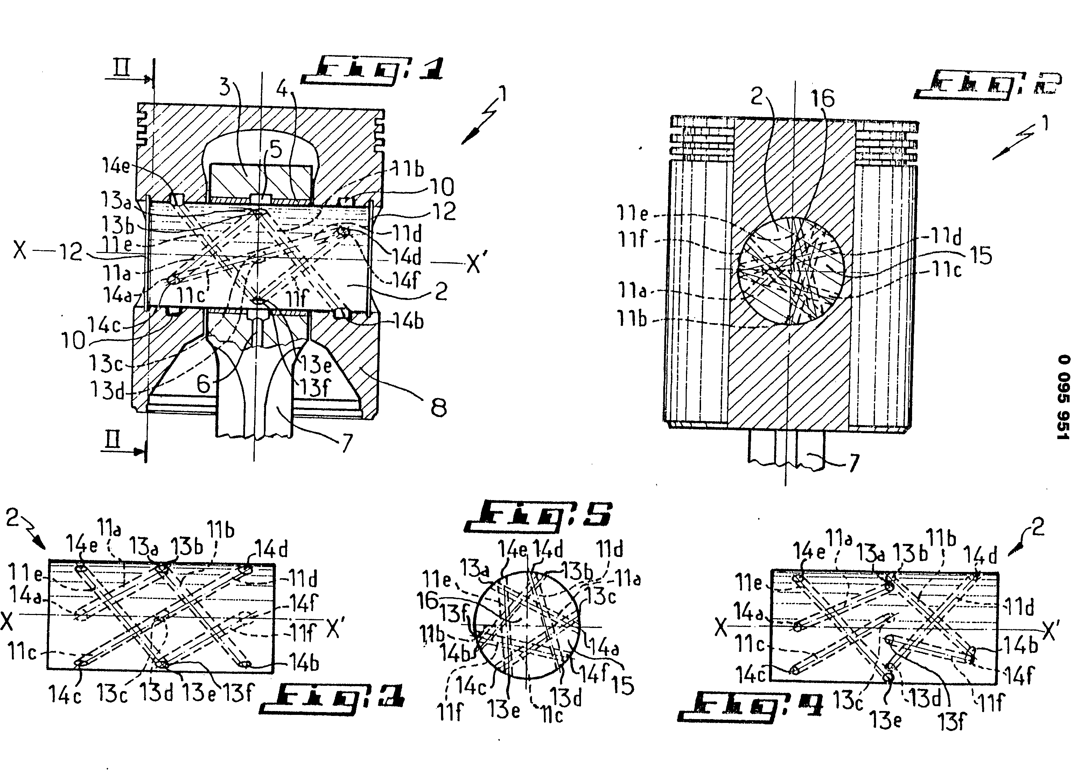

En se référant plus particulièrement aux figures 1 et 2, le piston 1, notamment de moteur à combustion interne, équipé de l'axe de piston 2 selon l'invention, est du type articulé par ledit axe de piston 2 à un pied de bielle 3, ledit axe de piston 2 étant monté tournant dans un coussinet 4 du pied de bielle 3 muni d'une rainure annulaire 5, notamment située dans le plan médian longitudinal de symétrie de l'axe de piston 2 et dans le plan médian longitudinal de symétrie du pied de bielle 3. La rainure annulaire 5 communique avec l'extrémité d'un canal 6 d'alimentation de fluide de refroidissement et/ou de lubrification, en particulier de l'huile, s'étendant dans le corps de la bielle 7 et débouchant à la surface d'extrémité du pied de bielle 3. L'axe de piston 2 est également monté tournant dans deux paliers 8 espacés solidaires du piston, situés de part et d'autre du pied de bielle 3 et munis de rainures annulaires 10.

L'axe de piston 2 est percé d'un certain nombre de canaux 11a à 11f notamment rectilignes, débouchant chacun, à une extrémité 13a à 13f dans la rainure annulaire 5 du coussinet 4 de pied de bielle 3 et, à l'autre extrémité 14a à 14f dans l'une ou l'autre des rainures annulaires 10 des paliers d'axe 8, cet axe étant par ailleurs plein.

Selon l'invention, les canaux 11a-11f sont ménagés dans une partie périphérique 15 dudit axe de piston 2 en étant au plus tangents à une partie centrale sensiblement cylindrique 16 dudit axe coaxiale à celui-ci, dans laquelle la concentration d'impuretés métalliques est maximale. Cet arrangement permet d'éviter les risques de création d'amorces de fissuration et de rupture dans la zone environnant l'axe géométrique longitudinal de l'axe de piston où s'accumulent généralement les impuretés métalliques fragilisantes, et d'éviter les concentrations de contraintes résultant de perçages sécants. Le diamètre de la partie centrale cylindrique 16 est notamment au moins égal à environ le dixième du diamètre de l'axe de piston 2, par exemple, comme représenté en figure 2, égal à environ le dixième du diamètre de l'axe de piston ; ou comme représenté en figure 5, environ égal au tiers dudit diamètre. En tout état de cause, les canaux ne rencontrent pas l'axe géométrique longitudinal X-X' de l'axe du piston, ni la zone immédiatement environnante. En outre, les canaux 11a-11f sont disposés de façon à ne pas être mutuellement sécants ; notamment dans la zone environnant l'axe géométrique longitudinal X-X' précité.

Les canaux 11a-11f peuvent être percés de façon qu'au moins deux desdits canaux convergent vers leurs extrémités débouchant dans la rainure annulaire 5 du coussinet 4 de pied de bielle 3. En particulier, deux canaux convergent vers lesdites extrémités, tandis que leurs autres extrémités débouchent respectivement dans l'une et l'autre des rainures annulaires 10 des paliers d'axe 8.

Dans le mode de réalisation spécifique illustré par les figures 1 et 2, l'axe de piston 2 est traversé par trois paires de canaux rectilignes 11a, 11b ; 11c, 11d ; 11e, 11f qui convergent deux à deux vers leurs extrémités 13a, 13b ; 13c, 13d ; 13e, 13f débouchant dans la rainure annulaire 5 du coussinet 4 du pied de bielle 3 en définissant un orifice commun, dans ladite rainure, aux deux canaux. Comme cela est représenté, les autres extrémités 14a, 14b ; 14c, 14d : 14e, 14f desdits canaux pris deux à deux débouchent dans l'une et l'autre des rainures annulaires 10 des paliers d'axe 8, respectivement. En d'autres termes, en considérant une paire de canaux 11a, 11b, l'extrémité 14a du canal 11a par exemple débouche dans une rainure annulaire 10 d'un palier d'axe 8, tandis qu'une extrémité 14b du canal 11b débouche dans la rainure annulaire de l'autre palier d'axe, les autres extrémités 13a, 13b des canaux 11a, 11b débouchant par un orifice commun dans la rainure annulaire 5 du coussinet 4 du pied de bielle 3. Dans le mode de réalisation représenté, il en va de même pour chacune des autres paires de canaux, étant bien entendu que le nombre de paires de canaux n'est nullement limité à trois.

En outre, de préférence, les points de convergence des axes longitudinaux des canaux 11a, 11b ; 11c, 11d ; 11e, 11f sont angulairement espacés de 120°, ainsi que les extrémités des axes longitudinaux desdits canaux débouchant dans les rainures annulaires 10 des paliers d'axe 8.

Selon le mode de réalisation de l'axe de piston illustré par la figure 3, étant bien entendu que celui-ci peut être utilisé dans un piston du type défini ci-dessus, chaque point de convergence des axes longitudinaux des canaux 11a-11f et deux extrémités des axes longitudinaux desdits canaux débouchant respectivement dans les rainures annulaires 10 des paliers d'axe 8 sont alignés selon une génératrice de l'axe de piston 2. Dans l'exemple représenté, l'axe de piston est percé de trois paires 11a, 11b ; 11c, 11d ; 11e, 11f de canaux. Dans ce cas de figure non limitatif, les points de convergence des axes longitudinaux des canaux, ainsi que les extrémités des axes longitudinaux des canaux débouchant dans les rainure annulaires des paliers d'axe sont angulairement espacées de 120°. De plus, si on considère par exemple la paire de canaux 11a, 11b, les extrémités 13a, 13b de ceux-ci convergent en un même orifice débouchant dans la rainure annulaire 5 du coussinet 4 de pied de bielle, orifice qui est aligné selon une génératrice de l'axe de piston 2 avec les extrémités 14e, 14d des canaux 11e, 11d, respectivement, débouchant dans l'une et l'autre des rainures annulaires 10 des paliers d'axe 8, respectivement. Il en est de même pour les extrémités communes 13c, 13d des canaux 11c et 11d, et les extrémités 14a, 14f des canaux 11a et 11f, respectivement ; ainsi que pour les extrémités communes 13e, 13f des canaux 11e, 11f, et les extrémités 14c, 14b des canaux 11c, 11b, respectivement. Cette configuration est bien sûr représentée à titre d'exemple, et toute autre configuration pour laquelle chaque point de convergence des axes des canaux et deux extrémités des axes des canaux débouchant respectivement dans les rainures annulaires des paliers d'axe sont alignés selon une génératrice de l'axe de piston fait également partie de l'invention.

Selon le mode de réalisation de l'axe de piston illustré par les figures 4 et 5, étant bien entendu que celui-ci peut être utilisé dans un piston du type défini ci-dessus, l'axe de piston 2 est percé de trois paires de canaux 11a-11f, ce nombre n'étant bien sûr pas limitatif. Chaque paire

comprend un canal 11a, 11c, 11e reliant la rainure annulaire 10 d'un des paliers d'axe 8 à la rainure annulaire 5 du coussinet 4 de pied de bielle 3 et un canal 11b, 11d, 11f reliant la rainure annulaire 10 de l'autre palier d'axe 8 à la rainure annulaire 5 du coussinet 4 de pied de bielle 3. Les extrémités 13a-13f, cette fois réalisées de façon indépendante, des axes longitudinaux des canaux 11a-11f débouchent dans la rainure annulaire 5 du coussinet 4 de pied de bielle en étant angulairement espacées de par exemple 60°. De même, les extrémités 14a-14f des axes longitudinaux des canaux 11a-11f débouchent dans les rainures annulaires 10 des paliers d'axe 8 en étant angulairement espacées de par exemple 120°. On peut par exemple réaliser les canaux 11a-11f de façon que leurs orifices 13a-13f s'ouvrant dans la rainure annulaire 5 du coussinet 4 de pied de bielle 3 appartiennent aux canaux 11a, 11c, 11e et 11b, 11d, 11f respectivement, reliant ladite rainure annulaire 5 du coussinet 4 de pied de bielle à alternativement l'une et l'autre rainures annulaires 10 des coussinets 9 de paliers d'axe 8.

Il est bien évident que l'axe de piston selon l'invention est fixé dans son logement par tout moyen approprié tels que par exemple des anneaux de blocage ou circlips 12.

**Revendications**

1. Axe de piston, pour un piston (1), notamment de moteur à combustion interne, du type articulé par un axe de piston (2), sensiblement cylindrique, à un pied de bielle (3), ledit axe de piston (2) étant monté tournant dans un coussinet (4) dudit pied de bielle (3) muni d'une rainure annulaire (5), notamment située dans le plan médian longitudinal de symétrie dudit axe de piston (2) et dudit pied de bielle (3) et communiquant avec l'extrémité d'un canal (6) d'alimentation de fluide de refroidissement et/ou de lubrification s'étendant dans le corps de la bielle (7) et débouchant à la surface d'extrémité du pied de bielle, et dans deux paliers (8) espacés solidaires du piston, situés de part et d'autre du pied de bielle (3) et munis de rainures annulaires (10), ledit axe de piston (2) étant percé d'un certain nombre de canaux (11a-11f), notamment rectilignes, débouchant chacun, à une extrémité (13a-13f) dans ladite rainure annulaire (5) dudit coussinet (4) de pied de bielle (3) et, à l'autre extrémité (14a-14f) dans l'une ou l'autre desdites rainures annulaires (10) desdits paliers d'axe (8), ledit axe de palier (2) étant par ailleurs plein, caractérisé en ce que lesdits canaux (11a-11f) sont ménagés dans une partie périphérique (15) dudit axe de piston (2) en étant au plus tangents à une partie centrale sensiblement cylindrique (16) dudit axe, coaxiale à celui-ci, dans laquelle la concentration d'impuretés métalliques est maximale.

2. Axe de piston selon la revendication 1, caractérisé en ce que le diamètre de la partie centrale cylindrique précitée est au moins égal environ le dixième du diamètre de l'axe de piston précité.

3. Axe de piston selon la revendication 1 ou 2, caractérisé en ce que les canaux précités ne sont pas sécants.

4. Axe de piston selon l'une des revendications 1 à 3, caractérisé en ce qu'au moins deux des canaux précités convergent vers leurs extrémités précitées débouchant dans la rainure annulaire précitée du coussinet de pied de bielle.

5. Axe de piston selon la revendication 4, caractérisé en ce que deux canaux précités convergent vers leurs extrémités précitées débouchant dans la rainure annulaire précitée du coussinet de pied de bielle, leurs autres extrémités débouchant respectivement dans les rainures annulaires des paliers d'axe.

6. Axe de piston selon la revendication 5, caractérisé en ce qu'il est prévu trois paires de canaux précités.

7. Axe de piston selon la revendication 6, caractérisé en ce que les points de convergence des axes longitudinaux des canaux précités sont angulairement espacés de 120°, ainsi que les extrémités des axes longitudinaux desdits canaux débouchant dans les rainures annulaires des coussinets de paliers d'axe.

8. Axe de piston selon la revendication 6 ou 7, caractérisé en ce que chaque point de convergence des axes longitudinaux des canaux précités et deux extrémités des axes longitudinaux desdits canaux débouchant respectivement dans les rainures annulaires des paliers d'axe sont alignés sur une génératrice de l'axe de piston.

9. Axe de piston selon l'une des revendications 1 à 3, caractérisé en ce que l'axe de piston précité est percé de trois paires de canaux précités, chaque paire comprenant un canal reliant la rainure annulaire précitée d'un des paliers d'axe à la rainure annulaire précitée du coussinet de pied de bielle, et un canal reliant la rainure annulaire de l'autre palier d'axe à ladite rainure annulaire du coussinet de pied de bielle ; les extrémités des axes longitudinaux desdits canaux débouchant dans ladite rainure annulaire du coussinet de pied de bielle étant angulairement espacées de 60°.

10. Axe de piston selon la revendication 9, caractérisé en ce que les extrémités des axes longitudinaux des canaux précités débouchant dans les rainures annulaires des paliers d'axe sont angulairement espacées de 120°.

11. Axe de piston selon la revendication 8 ou 9, caractérisé en ce que les orifices des canaux précités s'ouvrant dans la rainure annulaire précitée du coussinet de pied de bielle appartiennent aux canaux reliant ladite rainure annulaire du coussinet de pied de bielle à alternativement l'une et l'autre rainures annulaires des paliers d'axe.

12. Piston, notamment pour moteur à combustion interne, caractérisé en ce qu'il est équipé de l'axe de piston selon l'une des revendications 1 à 11.

## Claims

1. A piston shaft for a piston (1), particularly for an internal combustion engine, the piston being articulated through a substantially cylindrical piston shaft at the basis (3) of a push-rod (7), said piston shaft (2) being on the one hand rotatively mounted in a bearing (4) of said basis (3) provided with an annular groove (5), particularly situated in the median longitudinal plane of symmetry of said piston shaft (2) and of said basis (3) and communicating with the end of a cooling and/or lubricating fluid supply channel (6) which extends through the rod (7) and emerges at the end surface of the basis of the rod, and on the other hand being mounted in two spaced pedestals (8) which are rigidly fixed to the piston and are situated on both sides of the basis (3) of the rod, and are provided with annular grooves (10), said piston shaft (2) being traversed by a certain number of channels (11a to 11f), particularly straight channels, each of which emerges at one end (13a to 13f) into said annular groove (5) of said bearing (4) in the basis (3) of the rod, and at the other end (14a to 14f) into one of said annular grooves (10) of said shaft pedestals (8), the shaft being otherwise solid, characterized in that said channels (11a to 11f) are situated in a peripheral portion (15) of said piston shaft (2) such that they are at most tangential to a substantially central part (16) of said shaft, which part is coaxial thereto and includes the highest concentration rate of metal impurities.

2. A piston shaft according to claim 1, characterized in that the diameter of said central cylindrical part is at least equal to about one tenth of the diameter of said piston shaft.

3. A piston shaft according to claim 1 or 2, characterized in that said channels do not cut each other.

4. A piston shaft according to one of claims 1 to 3, characterized in that at least two of said channels converge towards their ends emerging into said annular groove of the bearing in the basis of the push-rod.

5. A piston shaft according to claim 4, characterized in that two said channels converge towards their ends emerging into said annular groove of the bearing in the basis of the push-rod, their other ends emerging respectively into the annular grooves of the shaft pedestals.

6. A piston shaft according to claim 5, characterized in that three pairs of said channels are provided.

7. A piston shaft according to claim 6, characterized in that the points of convergence of the longitudinal axes of said channels are angularly spaced for 120°, as well as the ends of the longitudinal axes of said channels emerging into the annular grooves of the bearings of the shaft pedestals.

8. A piston shaft according to claims 6 or 7, characterized in that each point of convergence of the longitudinal axes of said channels is aligned, together with two ends of the longitudinal axes of said channels emerging respectively into the annular grooves of the shaft pedestal, on a common generatrix line of the piston shaft.

9. A piston shaft according to one of claims 1 to 3, characterized in that said piston shaft is provided with three pairs of said channels, each pair comprising a channel connecting said annular groove of one of the shaft pedestals to said annular groove of the bearing in the basis of the push-rod, and a channel connecting the annular groove of the other shaft pedestal to said annular groove of the bearing in the basis of the push-rod, the ends of the longitudinal axes of said channels emerging into said annular groove of the bearing in the basis of the push-rod being angularly spaced by an angle of 60 °C.

10. A piston shaft according to claim 9, characterized in that the ends of the longitudinal axes of said channels emerging into the annular grooves of the shaft pedestals are angularly spaced by an angle of 120°.

11. A piston shaft according to claim 8 or 9, characterized in that the apertures of said channels opening into said annular groove of the bearing in the basis of the push-rod belong to the channels connecting said annular groove of the bearing in the basis of the push-rod alternately to one and the other annular groove of the shaft pedestals.

12. A piston, particularly for an internal combustion engine, characterized in that it is equipped with the piston shaft according to one of claims 1 to 11.

## Patentansprüche

1. Kolbenwelle für einen Kolben (1), insbesondere einer Verbrennungskraftmaschine, der durch eine im wesentlichen zylindrische Kolbenwelle (2) an einen Pleuelfuß (3) angelenkt ist, wobei die Kolbenwelle (2) einerseits drehend in einer Lagerschale (4) des Pleuelfußes (3), welcher mit einer Ringnut (5) versehen ist, die sich insbesondere in der mittleren Längs-Symmetriebene der Kolbenwelle (2) und des Pleuelfußes (3) befindet und die mit dem Ende eines Versorgungskanals (6) für Kühl- und/oder Schmierfluid verbunden ist, der sich im Inneren der Pleuelstange (7) erstreckt und an der Endoberfläche des Pleuelfußes mündet, und andererseits in zwei mit dem Kolben fest verbundenen, auseinanderliegenden Lagern (8) sitzt, die auf beiden Seiten des Pleuelfußes (3) angeordnet und mit ringförmigen Nuten (10) versehen sind, wobei die Kolbenwelle (2) von einer gewissen Anzahl von insbesondere geradlinigen Kanälen (11a-11f) durchdrungen wird, die je an einem Ende (13a-13f) in die ringförmige Nut (5) des Lagers (4) des Pleuelfußes (3) und am anderen Ende (14a-14f) in eine der ringförmigen Nuten (10) der Wellenlager (8) münden, wobei die Lagerwelle (2) im übrigen kompakt ist, dadurch gekennzeichnet, daß die Kanäle (11a-11f) sich in einem peripheren Teil (15) der Kolbenwelle (2) befinden und einen im wesentlichen zylindrischen zentralen und zur Welle koaxialen Teil (16) dieser Welle höchstens berühren, in dem die Konzentration an metallischen Unreinheiten maximal ist.

2. Kolbenwelle nach Anspruch 1, dadurch gekennzeichnet, daß der Durchmesser des obengenannten zylindrischen zentralen Teils mindestens gleich dem zehnten Teil des Durchmessers der obengenannten Kolbenwelle ist.

3. Kolbenwelle nach Anspruch 1 oder 2, dadurch gekennzeichnet, daß die obengenannten Kanäle sich nicht schneiden.

4. Kolbenwelle nach einem der Ansprüche 1 bis 3, dadurch gekennzeichnet, daß mindestens zwei der obengenannten Kanäle zu ihren obengenannten Enden hin konvergieren, die in die obengenannte ringförmige Nut der Pleuelfuß-Lagerschale münden.

5. Kolbenwelle nach Anspruch 4, dadurch gekennzeichnet, daß zwei obengenannte Kanäle zu denjenigen ihrer obengenannten Enden hin konvergieren, die in die obengenannte ringförmige Nut der Pleuelfuß-Lagerschale münden, während ihre anderen Ende jeweils in die ringförmigen Nuten der Wellenlager münden.

6. Kolbenwelle nach Anspruch 5, dadurch gekennzeichnet, daß drei Paare der obengenannten Kanäle vorgesehen sind.

7. Kolbenwelle nach Anspruch 6, dadurch gekennzeichnet, daß die Konvergenzpunkte der Längsachsen der obengenannten Kanäle einen Winkelabstand von 120° besitzen, ebenso wie auch die Enden der Längsachsen der genannten Kanäle, die in die ringförmigen Nuten der Wellenlager münden.

8. Kolbenwelle nach Anspruch 6 oder 7, dadurch gekennzeichnet, daß jeder Konvergenzpunkt der Längsachsen der obengenannten Kanäle und zwei Enden der Längsachsen der genannten Kanäle, die je in die ringförmigen Nuten der Wellenlager münden, fluchtend auf einer Mantellinie der Kolbenwelle angeordnet sind.

9. Kolbenwelle nach einem der Ansprüche 1 bis 3, dadurch gekennzeichnet, daß die obengenannte Kolbenwelle von drei Paaren der obengenannten Kanäle durchdrungen wird, wobei jedes Paar einen Kanal, der die obengenannte ringförmige Nut eines der Wellenlager mit der obengenannten ringförmigen Nut der Pleuelfußlagerschale verbindet, und einen Kanal aufweist, der die ringförmige Nut des anderen Wellenlagers mit der genannten ringförmigen Nut der Pleuelfußlagerschale verbindet, wobei die Enden der Längsachsen dieser Kanäle, die in die ringförmige Nut der Pleuelfußlagerschale einen Winkelabstand von 60° aufweisen.

10. Kolbenwelle nach Anspruch 9, dadurch gekennzeichnet, daß die Enden der Längsachsen der genannten Kanäle, die in die ringförmigen Nuten der Wellenlager münden, einen Winkelabstand von 120° besitzen.

11. Kolbenwelle nach den Ansprüchen 8 oder 9, dadurch gekennzeichnet, daß die Öffnungen der obengenannten Kanäle, die sich in die obengenannte ringförmige Nut der Pleuelfußlagerschale öffnen, zu den Kanälen gehören, die die genannte ringförmige Nut der Pleuelfußlagerschale mit abwechselnd der einen und der anderen der ringförmigen Nuten der Wellenlager verbinden, gehören.

12. Kolben, insbesondere für eine Verbrennungsmaschine, dadurch gekennzeichnet, daß er mit der Kolbenwelle nach einem der Ansprüche 1 bis 11 ausgerüstet ist.

Fig.2

Fig.1

Fig.3

Fig.4

Fig.5